(19) Europäisches Patentamt
European Patent Office
Office européen des brevets

(11) **EP 2 609 688 B1**

(12) **EUROPÄISCHE PATENTSCHRIFT**

(45) Veröffentlichungstag und Bekanntmachung des Hinweises auf die Patenterteilung:
**23.04.2014 Patentblatt 2014/17**

(21) Anmeldenummer: **11754613.5**

(22) Anmeldetag: **10.08.2011**

(51) Int Cl.:
***H04B 5/00*** *(2006.01)*

(86) Internationale Anmeldenummer:
**PCT/EP2011/004012**

(87) Internationale Veröffentlichungsnummer:
**WO 2012/025196 (01.03.2012 Gazette 2012/09)**

(54) **VERFAHREN UND VORRICHTUNG ZUR KOMMUNIKATION ZWISCHEN EINER ANTENNENEINRICHTUNG UND TRANSPONDERN**

METHOD AND DEVICE FOR COMMUNICATION BETWEEN AN ANTENNA APPARATUS AND TRANSPONDERS

PROCÉDÉ ET DISPOSITIF DE COMMUNICATION ENTRE UN SYSTÈME D'ANTENNE ET DES TRANSPONDEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.08.2010 DE 102010035116**

(43) Veröffentlichungstag der Anmeldung:
**03.07.2013 Patentblatt 2013/27**

(73) Patentinhaber: **Fraunhofer-Gesellschaft zur Förderung der angewandten Forschung e.V.
80686 München (DE)**

(72) Erfinder:
• **FUHR, Günter
13187 Berlin (DE)**
• **ZIMMERMANN, Heiko
66386 St. Ingbert (DE)**
• **HICHRI, Karim
66280 Sulzbach (DE)**
• **IHMIG, Frank
66280 Sulzbach (DE)**

(74) Vertreter: **Hertz, Oliver
v. Bezold & Partner
Patentanwälte
Akademiestrasse 7
80799 München (DE)**

(56) Entgegenhaltungen:
**DE-A1-102005 050 099    DE-A1-102011 004 674
US-A1- 2008 055 093**

• **KARIM HICHRI ET AL: "RFID system for the identification of biological samples", ELECTRONIC SYSTEM-INTEGRATION TECHNOLOGY CONFERENCE (ESTC), 2010 3RD, IEEE, PISCATAWAY, NJ, USA, 13. September 2010 (2010-09-13), Seiten 1-5, XP031806772, ISBN: 978-1-4244-8553-6**

**Beschreibung**

Die Erfindung bezieht sich auf ein Verfahren zur Datenübertragung zwischen einer Antenneneinrichtung und einer Vielzahl von Transpondern, bei dem eine Antenneneinrichtung betätigt wird, um eine elektromagnetische Wechselwirkung mit mindestens einem der Transponder zu bilden. Des Weiteren bezieht sich die Erfindung auf eine Vorrichtung zur Datenübertragung. Anwendungen sind beispielsweise bei der Identifikation biologischer Proben gegeben.

Es ist bekannt, Probenbehälter für biologische Proben mit einer großen Dichte zu lagern. Die Probenbehälter können mit mikroelektronischen Bauteilen und/oder Transpondern ausgestattet sein. Transponder ersetzen zunehmend die herkömmliche Identifikation von Gegenständen mittels Strichcodes. Dafür sind Transponder mit den verschiedensten, auf die jeweilige Anwendung abgestimmten Bauformen bekannt.

Der Begriff Transponder benennt als Abkürzung aus "Transmitter" und "Responder" eine Sende- und Empfangseinrichtung, die nach einer empfangenen und ausgewerteten Anfrage eine Reaktion zeigt, z.B. eine Antwort erteilt. Allgemein umfasst ein Transponder einen Resonanzkreis und einen integrierten Schaltkreis mit einem Datenspeicher (Transponderspeicher). Eine Datenübertragung vom Datenspeicher des Transponders über einen drahtlosen Übertragungskanal, beispielsweise zu einer zentralen Steuerung, erfolgt durch Verwendung des Resonanzkreises als Sende- oder Empfangsantenne. Der Resonanzkreis ist auf eine bestimmte Sende- oder Empfangsfrequenz, z. B. im Radiofrequenzbereich (100 kHz bis einige 10 MHz) oder im Mikrowellenbereich abgestimmt. Zur Kommunikation bestrahlt eine Antenneneinrichtung den Transponder mit einem elektromagnetischen Wechselfeld. Beim Senden moduliert der Transponder in das eingestrahlte Wechselfeld die Daten des Transponderspeichers. Zudem wird im Fall eines so genannten passiven Transponders das eingestrahlte elektromagnetische Wechselfeld zur Energieversorgung des Transponders verwendet, wobei im Resonanzkreis des Transponders ein Strom für die Stromversorgung des Datenspeichers induziert wird. Beim passiven Transponder wird die benötigte Energie für den Betrieb des Datenspeichers durch eine rein induktive Kopplung zugeführt.

Die Integration von Transpondern z. B. in Probenbehälter ermöglicht eine kontaktlose Probenidentifizierung basierend auf der RFID-Technik (Radiofrequenz-Identifizierungs-Technik). Die Vorteile der kontaktlosen Identifizierung sind unter anderem die hohe Speicherkapazität, die Unempfindlichkeit gegen Umwelteinflüsse wie Verschmutzung, und eine hohe Reichweite. Der Transponder erfüllt dabei die Funktion eines Etiketts, das die Information über die Probe trägt. Die kontaktlose Identifizierung hat ferner wichtige Vorteile bei automatisierten Prozessen der Probenaufarbeitung, Analytik und Diagnostik.

Ein Problem kann jedoch bei einer Anordnung einer Vielzahl von Transpondern im Feld der Antenneneinrichtung auftreten, wo alle Transponder mit Energie versorgt werden. Aufgrund der Energiezufuhr durch induktive Kopplung kann ein einzelner Transponder für eine Datenübertragung ausschließlich zu diesem Transponder nicht gezielt angesprochen werden. Zudem wird an den Transpondern jeweils eine Spannung induziert, wodurch Felder der Transponder in Gegenrichtung zum Wechselfeld der Antenneneinrichtung erzeugt werden und sich gegenseitig überlagern. Oberhalb einer bestimmten Packungsdichte der Transponder (Anzahl der Transponder auf einer definierten Fläche oder in einem definierten Volumen) wird es daher schwierig oder sogar unmöglich, fehlerfrei mit den Transpondern zu kommunizieren.

Aus der Praxis ist bekannt, mittels Software-basierten Antikollisionsverfahren die Transponder im Feld der Antenneneinrichtung voneinander zu unterscheiden. Diese Verfahren zeigen jedoch deutliche Limitierungen, wenn die Zahl der Transponder im Feld der Antenneneinrichtung steigt. Tests haben ergeben, nur dann mit z.B. 48 passiven Transpondern fehlerfrei kommunizieren zu können, wenn sie einen gegenseitigen Abstand von mindestens 18 mm haben. Folglich ist bei Anwendung der Antikollisionsverfahren die Packungsdichte von Transpondern limitiert. Die Antenneneinrichtung kann die tatsächlich vorhandene Objektzahl im Feld bei größeren Packungsdichten nicht mehr auflösen und somit keine fehlerfreie Kommunikation mit den Transpondern durchführen.

In DE 10 2005 050 099 A1 wird eine Vorrichtung zum gezielten Unterbinden der Kommunikation von einem oder mehreren Transpondern mit einer Lesevorrichtung beschrieben. Dabei erfolgt eine Beeinflussung der drahtlosen Schnittstelle zwischen einem Transponder und dem Lesegerät durch eine Schwächung des Antennenfeldes der Leseantenne, so dass der Transponder nicht mehr ausreichend mit Energie versorgt wird. Diese Vorrichtung ist jedoch zur selektiven Anwendung für einzelne Transponder innerhalb einer Vielzahl von Transpondern hoher Packungsdichte und insbesondere für eine Pulkerfassung von Transpondern ungeeignet.

In DE 10 2011 004 674 A1 wird eine Klebefolie zum Anbringen an einem Trägerelement mit einem eine Antenne aufweisenden passiven RFID-Transponder beschrieben, die mit einem Schwingkreis und einem mechanischen Schalter ausgestattet ist. Der Schalter kann zur Deaktivierung oder Aktivierung des RFID-Transponders geschlossen oder geöffnet werden.

Die Aufgabe der Erfindung ist es, ein verbessertes Verfahren zur Kommunikation zwischen einer Antenneneinrichtung und einer Vielzahl von Transpondern bereitzustellen, mit dem Nachteile herkömmlicher Techniken vermieden werden. Dabei soll insbesondere eine fehlerfreie Datenübertragung auf einzelne Transponder ohne eine Beschränkung auf eine maximale Packungsdichte der Transponder ermöglicht werden. Die Aufgabe der Erfindung ist es des Weiteren, verbesserte Vorrichtungen zur Datenübertragung bereitzustellen, mit denen Nachteile herkömmlicher Techniken vermieden werden.

Diese Aufgaben wird mit Verfahren bzw. Vorrichtungen mit den Merkmalen der unabhängigen Ansprüche gelöst. Vorteilhafte Ausführungsformen der Erfindung ergeben sich aus den abhängigen Ansprüchen.

Verfahrensbezogen wird die genannte Aufgabe gelöst, indem bei einer Kommunikation zwischen einer Antenneneinrichtung und Transpondern eine Vielzahl von Abschirmspulen bereitgestellt werden, wobei jeweils eine der Abschirmspulen auf einen der Transponder einwirken kann, um die elektromagnetische Wechselwirkung zwischen der Antenneneinrichtung und dem betreffenden Transponder zu unterdrücken. Jeweils eine der Abschirmspulen wird an einem der Transponder angeordnet. Mindestens eine der Abschirmspulen wird elektrisch kurzgeschlossen, so dass die elektromagnetische Wechselwirkung mit dem Transponder unterdrückt wird, an dem die kurzgeschlossene Abschirmspule angeordnet ist. Das Feld der Antenneneinrichtung induziert an der Abschirmspule eine Spannung. Wenn die Abschirmspule kurzgeschlossen ist, fließt in dieser Abschirmspule ein Strom. Der induzierte Strom erzeugt einen magnetischen Fluss, der dem Feld des Transponders (Transponderfeld) entgegenwirkt. Folglich schwächt das Feld der kurzgeschlossenen Abschirmspule (Abschirmfeld oder Gegenfeld) das Transponderfeld. Dadurch werden vorteilhafterweise die vom Transponder gesendeten Daten von der Antenneneinrichtung nicht detektiert, und der Transponder ist nicht auslesbar.

Vorrichtungsbezogen wird die genannte Aufgabe durch eine Datenübertragungsvorrichtung gelöst, die eine Antenneneinrichtung und eine Vielzahl von Transponder aufweist und mit derart angeordneten Abschirmspulen ausgestattet ist, dass jede der Abschirmspulen auf einen Transponder einwirken kann, um die elektromagnetische Wechselwirkung zwischen der Antenneneinrichtung mit dem Transponder zu unterdrücken. Es ist eine Vielzahl von Abschirmspulen vorgesehen, die jeweils an einem der Transponder angeordnet sind, wobei mindestens eine der Abschirmspulen elektrisch kurzgeschlossen werden kann, so dass die elektromagnetische Wechselwirkung mit dem mindestens einen Transponder unterdrückt wird, an dem die mindestens eine kurzgeschlossene Abschirmspule angeordnet ist.

Die Abschirmspulen umfassen allgemein eine Induktivität mit mindestens einem elektrischen Leiter. Die Gestalt und Größe der Abschirmspulen können in Abhängigkeit von den konkreten Anwendungsbedingungen gewählt werden. Es können insbesondere aus fertigungstechnischen oder funktionalen Gründen verschiedene Anordnungen und Geometrien der Abschirmspulen vorgesehen sein.

Gemäß der Erfindung wird mindestens ein Transponder, bevorzugt ein einziger Transponder ausgewählt, für den die elektromagnetische Wechselwirkung mit der Antenneneinrichtung unbeeinflusst bleiben soll, wobei alle Abschirmspulen mit Ausnahme der Abschirmspule des mindestens einen ausgewählten Transponders kurzgeschlossen werden.

Gemäß der Erfindung ist ein Schalten der Abschirmspulen zwischen einem kurzgeschlossenen und einem nicht-kurzgeschlossenen Zustand vorgesehen. Die Abschirmspulen werden mit einer Selektiereinrichtung geschaltet. Die Selektiereinrichtung ist eine elektronische Schaltung, die dazu eingerichtet ist, selektiv einzelne Abschirmspulen zu schalten, um die Gegenfelder zu den Transponderfeldern selektiv zu aktivieren oder zu deaktivieren. Die Selektiereinrichtung öffnet (elektrisch trennt) die elektrischen Spulenkontakte der Abschirmspule von mindestens einem ausgewählten Transponder, und/oder die Selektiereinrichtung schließt die Spulenkontakte der Abschirmspulen von den übrigen Transpondern kurz. Wenn die Spulenkontakte einer Abschirmspule geöffnet sind, dann hat die Abschirmspule keinen Einfluss auf die elektromagnetische Wechselwirkung zwischen dem zugehörigen Transponders und der Antenneneinrichtung. Werden jedoch die Spulenkontakte einer Abschirmspule kurzgeschlossen, wird die elektromagnetische Wechselwirkung zwischen der Antenneneinrichtung und dem zugehörigen Transponder zumindest teilweise unterdrückt. Vorteilhafterweise kann mit der Selektiereinrichtung die Wirkung der Abschirmspulen variabel kontrolliert werden.

Bei einer weiteren bevorzugten Ausführungsform der Erfindung ist vorgesehen, die Spulenkontakte der Abschirmspulen jeweils mit einem Relais auszustatten. Vorteilhafterweise vereinfacht die Verwendung eines Relais das Schalten der Abschirmspulen, da das Relais die Spulenkontakte der Abschirmspule in Abhängigkeit von einem Schaltsignal, z. B. Schaltstrom, öffnen oder schließen kann. Gemäß einer besonders vorteilhaften Ausführungsform der Erfindung sind die Spulenkontakte mit jeweils einem Reedrelais versehen. Ein Reedrelais ist ein Magnetschalter, der durch ein von außen einwirkendes Magnetfeld geschaltet werden kann. Das Magnetfeld kann durch eine Relaisspule erzeugt werden, die auf das Reedrelais einwirkt. Durch das Betätigen der Relaisspule ist es vorteilhafterweise möglich, die Spulenkontakte der Abschirmspule kontaktlos zu schalten und somit das Transponderfeld kontaktlos zu unterdrücken, das erzeugt wird, wenn der Transponder sich im Feld der Antenneneinrichtung befindet.

Das Reedrelais kann ein Reedrelais mit sogenannter Öffner-Funktion sein. Wird das Reedrelais mit Öffner-Funktion an die Spulenkontakte einer Abschirmspule angeschlossen und befindet sich das Reedrelais in einem stromlosen Zustand, sind die Spulenkontakte der Abschirmspule kurzgeschlossen. Wenn das Reedrelais mit einer Relaisspule geschaltet wird und die Abschirmspule kurzgeschlossen ist, ist die Relaisspule in einem stromlosen Zustand. Somit hat die Relaisspule in diesem Zustand keine Wirkung auf das Reedrelais. Dies hat vorteilhafterweise zur Folge, dass in diesem Zustand die Abschirmspule ein Gegenfeld zum Unterdrücken des Transponderfeldes erzeugt. Der Vorteil dieser Ausführungsform ist ein eriergiesparendes Unterdrücken des Transponderfeldes. Befindet sich das Reedrelais mit Öffner-Funktion in einem Zustand, in dem ein Strom durch die Relaisspule fließt, die das zugehörige Reedrelais schaltet, dann sind die Spulenkontakte der Abschirmspule geöffnet. Die Abschirmspule hat in diesem Zustand vorzugsweise keine Wirkung auf das Transponderfeld.

Alternativ kann das Reedrelais ein Reedrelais mit Schließer-Funktion sein. Wird das Reedrelais mit Schließer-Funktion an die Spulenkontakte einer Abschirmspule angeschlossen, sind diese in einem stromlosen Zustand der Relaisspule geöffnet. In diesem Zustand wird an der Abschirmspule kein Feld erzeugt, um das Transponderfeld zu unterdrücken. Der Transponder ist im Feld der Antenneneinrichtung ansprechbar. Befindet sich das Reedrelais in einem Zustand, in dem ein Strom durch die Relaisspule fließt, dann befindet sich das Reedrelais in einem Zustand, in dem die Spulenkontakte der Abschirmspule geschlossen sind. In diesem Zustand wird ein Feld an der Abschirmspule erzeugt, um das Transponderfeld zu unterdrücken. Ein Vorteil dieser Variante kann sich ergeben, wenn alle Transponder regelmäßig gleichzeitig beschrieben werden sollen. So wird das Transponderfeld energiesparend nicht unterdrückt.

Wenn gemäß einer weiteren Ausführungsform der Erfindung vorgesehen ist, dass jede der Abschirmspulen jeweils einen Transponder einschließt, können sich Vorteile für die Unterdrückung des Transponderfeldes ergeben. Die Abschirmspule ist vorzugsweise so gebildet, dass sie den Transponder zumindest entlang der Ausdehnung des im Transponder enthaltenen Resonanzkreises einhüllt. Die Abschirmspule kann den Transponder komplett einschießen. Dies ist jedoch nicht zwingend erforderlich. Zur erfindungsgemäßen Erzeugung des Abschirmfeldes, welches das Transponderfeld unterdrückt, kann es ausreichend sein, wenn sich die Abschirmspule z. B. über die axiale Länge eines stabförmigen Transponders erstreckt. Es kann in Abhängigkeit von den Kennwerten der Datenübertragungsvorrichtung sogar ausreichend sein, dass sich die Abschirmspule nur über einen Teil, z. B. die Hälfte der axialen Länge des Transponders erstreckt.

Erfindungsgemäß kann vorgesehen sein, dass jeder der Transponder jeweils mit einem Probenbehälter zur Aufnahme biologischer Proben verbunden ist. Vorteilhafterweise können dadurch die Transponder jeweils einem Probenbehälter zugeordnet werden. Jede der erfindungsgemäß vorgesehenen Abschirmspulen kann mit einem der Probenbehälter fest verbunden sein oder einen der Probenbehälter einschließen, so dass die Abschirmspulen jeweils auf einen Transponder einwirken können.

Gemäß einer weiteren Ausführungsform der Erfindung können die Abschirmspulen und die Transponder auf einer gemeinsamen Trägereinrichtung angeordnet sein, wobei vorzugsweise die Reedrelais mit den Spulenkontakten der Abschirmspulen verbunden und ebenfalls auf der Trägereinrichtung angeordnet sind. Bei dieser Ausführungsform ist die Benutzung von Relaisspulen ein wichtiger Vorteil, da diese kontaktlos die zugehörigen Reedrelais schalten können. Die Relaisspulen sind vorzugsweise mit der Selektiereinrichtung verbunden, so dass diese die Relaisspulen einzeln schalten kann. Des Weiteren sind die Selektiereinrichtung und die Trägereinrichtung vorzugsweise relativ zueinander beweglich, so dass eine gegenseitige Ausrichtung möglich ist. Durch die Ausrichtung der Selektiereinrichtung mit den Relaisspulen relativ zur Trägereinrichtung mit den Reedrelais kann die Selektiereinrichtung mittels der Relaisspulen die Abschirmspulen auf der Trägereinrichtung schalten. Der Vorteil ist das kontaktlose Auswählen und Schalten der Abschirmspulen für die Datenübertragung zwischen der Antenneneinrichtung und den ausgewählten Transpondern.

Gemäß einer weiteren Ausführungsform der Erfindung können die Abschirmspulen mit der Selektiereinrichtung fest verbunden sein. Die Selektiereinrichtung mit den Abschirmspulen und die Transponder sind relativ zueinander beweglich, so dass eine gegenseitige Ausrichtung und die Bereitstellung der Abschirmspulen an den Transpondern möglich ist. Aufgrund der gegenseitigen Ausrichtung der Selektiereinrichtung und der Transponder können vorteilhafterweise die Abschirmspulen auf die Transponder einwirken.

Einen weiteren, unabhängigen Gegenstand der Erfindung stellt eine Trägereinrichtung für Probenbehälter dar, die für eine Datenübertragung mit einer Antenneneinrichtung gemäß dem erfindungsgemäßen Verfahren konfiguriert ist und zur Aufnahme einer Vielzahl von Probenbehältern mit Transpondern eingerichtet ist, wobei an jedem der Transponder eine Abschirmspule angeordnet ist. In diesem Fall sind die Abschirmspulen mit der Trägereinrichtung fest verbunden.

Einen weiteren, unabhängigen Gegenstand der Erfindung stellt eine Antenneneinrichtung dar, die für eine Datenübertragung mit Transpondern gemäß dem erfindungsgemäßen Verfahren konfiguriert ist und die mit den Abschirmspulen und der Selektiereinrichtung zum Schalten der Abschirmspulen ausgestattet ist. In diesem Fall sind die Abschirmspulen mit der Antenneneinrichtung fest verbunden.

Die Erfindung wird vorzugsweise mit einem niederfrequenten RFID-System mit passiven Transpondern, die im LF-Bereich (120-135 kHz) arbeiten, realisiert. Diese sind vorteilhafterweise am wenigsten empfindlich gegenüber störenden Umgebungseinflüssen von Flüssigkeiten (Dämpfung) und metallischen Oberflächen (Reflexion), die bei einem Einsatz in biotechnologischen Anwendungen und Biobanken zu berücksichtigen sind.

Varianten der Erfindung können folgendermaßen ausgeführt werden:

- Anpassung an alle anderen Frequenzbereiche wie HF und UHF, um andere Transpondertypen nutzen zu können,
- Anpassung an aktive Transponder für den Laboreinsatz, und/ oder
- Anpassung für den Tieftemperaturbereich bis -196°C mit passiven Transpondern durch Auswahl und Test geeigneter Materialien und Bauteile sowie Anpassung der Spulenparameter.

Zusammengefasst hat die vorliegende Erfindung insbesondere Vorteile bei der Pulkerfassung einer Vielzahl von Transpondern, die in einem Array so dicht wie möglich zueinander gepackt sind. Das erfindungsgemäße Verfahren ist so konzipiert, dass es für eine dichte Packung und auch selektiv funktioniert, wobei transponderseitige Kopplung und Kollisionsprobleme vermieden werden. Die Erfindung hat ferner den Vorteil, dass auch Transponder ohne Antikollisionsunterstützung eingesetzt werden können, was das Nutzungsspektrum an Transpondern erweitert. Die Abschirmung als Schutz von einzelnen Transpondern oder dem gesamten Array vor externem Zugriff kommt als zusätzlicher Nutzen der Erfindung hinzu. Einzelne Transponder sind selektierbar. In der vorliegenden Erfindung ist es möglich, sowohl geschirmte als auch ungeschirmte Transponder in dem gleichen Antennenfeld zu verwenden. Die erfindungsgemäß mögliche Abschirmung kann selektiv für einzelne oder mehrere Positionen im Array geschaltet werden.

Weitere Vorteile und Einzelheiten der Erfindung werden aus der Beschreibung der beigefügten Zeichnungen ersichtlich. Es zeigen:

Figur 1: eine schematische Darstellung eines Transponders mit einer Abschirmspule,

Figur 2: eine schematische Darstellung eines Resonanzkreises eines Transponders innerhalb einer Abschirmspule,

Figur 3: eine schematische Perspektivansicht eines Probenbehälters mit einem Transponder und einer Abschirmspule,

Figur 4: eine schematische Seitenansicht einer Ausführungsform einer Datenübertragungsvorrichtung gemäß der vorliegenden Erfindung, bei der die Abschirmspulen mit einer Trägereinrichtung verbunden sind,

Figur 5: eine schematische Perspektivansicht einer praktischen Variante der Datenübertragungsvorrichtung gemäß Figur 4,

Figur 6: ein schematisches Schaltbild einer Selektiereinrichtung, die bei der Ausführungsform gemäß den Figur 4 oder 5 verwendet wird, und

Figur 7: eine schematische Seitenansicht einer Ausführungsform einer Datenübertragungsvorrichtung gemäß der vorliegenden Erfindung, bei der die Abschirmspulen mit der Antenneneinrichtung verbunden sind.

Die erfindungsgemäße Unterdrückung von Transponderfeldern mit Abschirmspulen wird im folgenden unter beispielhaftem Bezug auf Ausführungsformen beschrieben, bei denen schaltbare Abschirmspulen vorgesehen sind. Die Erfindung ist jedoch nicht auf die Verwendung schaltbarer Abschirmspulen beschränkt, sondern entsprechend auch mit dauerhaft kurzgeschlossenen, relativ zu den Transpondern beweglichen Abschirmspulen realisierbar (dynamische Zuführung der Abschirmspulen von extern, z. B. manuell oder über Robotik). Die dynamische Zuführung von Abschirmspulen kann auch bei schaltbaren Abschirmspulen vorgesehen sein.

Es wird ferner beispielhaft auf stabförmige Transponder Bezug genommen, wobei die Erfindung nicht auf diese Bauform der Transponder beschränkt, sondern entsprechend auch mit anders gestalteten, z. B. plattenförmigen Transpondern realisierbar ist. Einzelheiten der Transpondertechnik, insbesondere des Aufbaus der Transponder oder der Antenneneinrichtung und deren Betrieb, sind an sich aus dem Stand der Technik bekannt und werden daher im folgenden nicht beschrieben.

Anwendungen der Erfindung sind bevorzugt bei der Handhabung einer Vielzahl von Gegenständen gegeben, von denen jeder mit einem Transponder ausgestattet ist. Im Folgenden wird beispielhaft auf eine Vielzahl von Probenbehältern für eine Kryospeichereinrichtung für biologische Proben Bezug genommen, ohne auf diese Anwendung beschränkt zu sein. Andere Anwendungen der Erfindung sind z. B. bei der Handhabung biologischer Proben, z. B. Blutröhrchen, bei Raumtemperatur oder bei der Handhabung von nicht-biologischen Proben, wie z. B. Werkstücken gegeben.

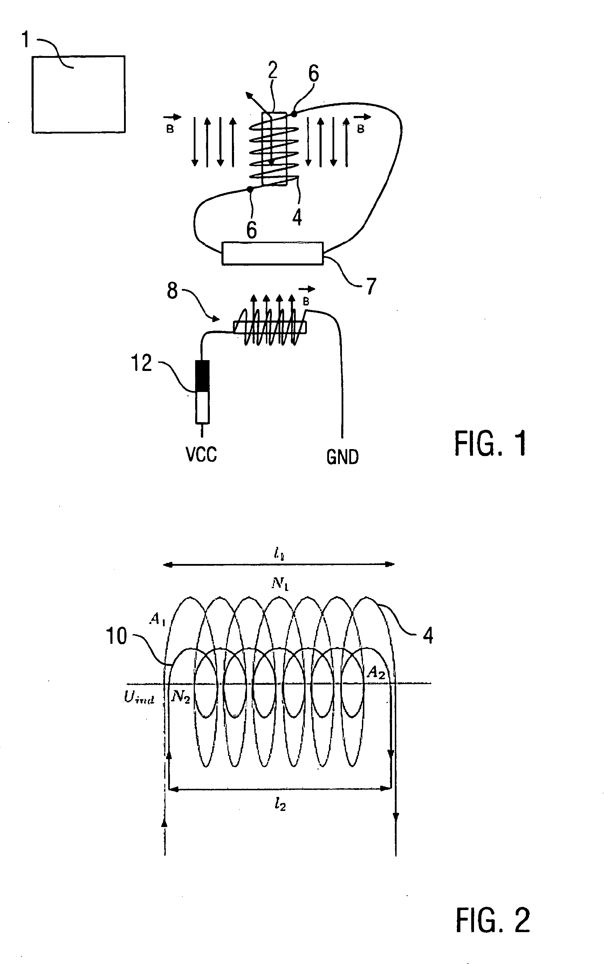

Zunächst wird die erfindungsgemäß vorgesehene Unterdrückung von Transponderfeldern unter Bezug auf die Figuren 1 und 2 erläutert. Figur 1 zeigt schematisch einen Transponder 2, der von einer Abschirmspule 4 umgeben ist. Der Transponder 2 enthält einen Resonanzkreis mit einer Induktivität, die schematisch in Figur 2 gezeigt ist (Transponderspule 10). Die Abschirmspule 4 umfasst mehrere Wicklungen (Windungen) eines elektrischen Leiters. Die Enden der Wicklungen, die als Spulenkontakte 6 bezeichnet werden, sind mit einem Reedrelais 7 verbunden, so dass das Reedrelais 7 die Spulenkontakte 6 der Abschirmspule 4 elektrisch trennen (öffnen) oder kurzschließen kann. Das Reedrelais 7 ist in an sich bekannter Weise mit einer Relaisspule 8 (Spule mit ferromagnetischem Kern) ausgestattet.

Die Relaisspule 8 ist mit einer schaltbaren Stromquelle verbunden und kann bei Beaufschlagung mit einem Schaltstrom ein Magnetfeld erzeugen, unter dessen Wirkung das Reedrelais 7 geschaltet wird. Für das Schalten der Abschirmspule 4 wird das Reedrelais 7 durch die Relaisspule 8 angesteuert. Beim schnellen Schalten der Relaisspule 8 können Störeffekte auftreten, da in den Relaisspulen 8 Restladungen gespeichert sein können. Aus diesem Grund kann eine Diode, beispielsweise eine Zenerdiode 12, mit der Relaisspule 8 für die Stabilisierung der Schaltvorgänge und zur Störungsminimierung zwischen einem Relaisspulenkontakt und der Stromquelle in Reihe geschaltet sein.

Wenn sich der Transponder 2 im Wechselfeld einer Antenneneinrichtung 1 befindet, wird jeweils an der Transponderspule 10 und an der Abschirmspule 4 gemäß dem Faraday'sche Gesetz $Ui_{nd}$ = -Nd$\Phi$/dt eine Spannung $U_{ind}$ induziert (N: Windungszahl, $\Phi$ magnetischer Fluss).

Bei der Transponderspule 10 ist nur ein Fall zu betrachten: Da die Transponderspule 10 Teil eines geschlossenen Stromkreis ist, fließt ein Wechselstrom durch die Transponderspule 10, der selbst ein Magnetfeld in Gegenrichtung zum ursprünglichen Feld der Antenneneinrichtung 1 verursacht.

Bei der Abschirmspule 4 sind zwei Fälle zu betrachten: Beim Einbringen der Abschirmspule 4 in das Wechselfeld der Antenneneinrichtung 1 wird in der Abschirmspule 4 eine Spannung $U_1$ induziert. Durch die Gegeninduktivität wird noch eine zweite Spannung $U_2$ induziert:

$$B(t) = \mu_0 . N_2 . I_2(t)/(l_2),$$

$$\text{dann } U_2 = -N_1 . A_1 . dB(t)/dt = -\mu_0 . N_2 . (N_1/l_2) . A_1 . (dI_2/(dt)).$$

($N_1$, $A_1$, $l_1$: Windungszahl, Querschnittsfläche, und axiale Länge der Abschirmspule, $N_2$, $A_2$, $l_2$: Windungszahl, Querschnittsfläche, und axiale Länge der Transponderspule)

Bei offenen Spulenkontakten 6 (nicht-kurzgeschlossene Abschirmspule 4) ist nur eine induzierte Spannung vorhanden, d. h. es fließt kein Strom. Aus diesem Grund hat die Abschirmspule 4 in diesem Fall keine störende Wirkung auf den Transponder, d.h. der Transponder ist aktiv (sichtbar).

Bei geschlossenen Spulenkontakten 6 (kurzgeschlossene Abschirmspule 4) resultiert aus der induzierten Spannung ein Strom, und nach der Lenz'schen Regel erzeugt dieser Strom einen magnetischen Fluss, der so gerichtet ist, dass er der Änderung des ursprünglichen Flusses entgegenwirkt. Damit wird das Transponderfeld so geschwächt, dass es von der Antenneneinrichtung 1 nicht mehr detektiert wird, obwohl dieser im Lesefeld steht, d.h. der Transponder ist inaktiv (unsichtbar).

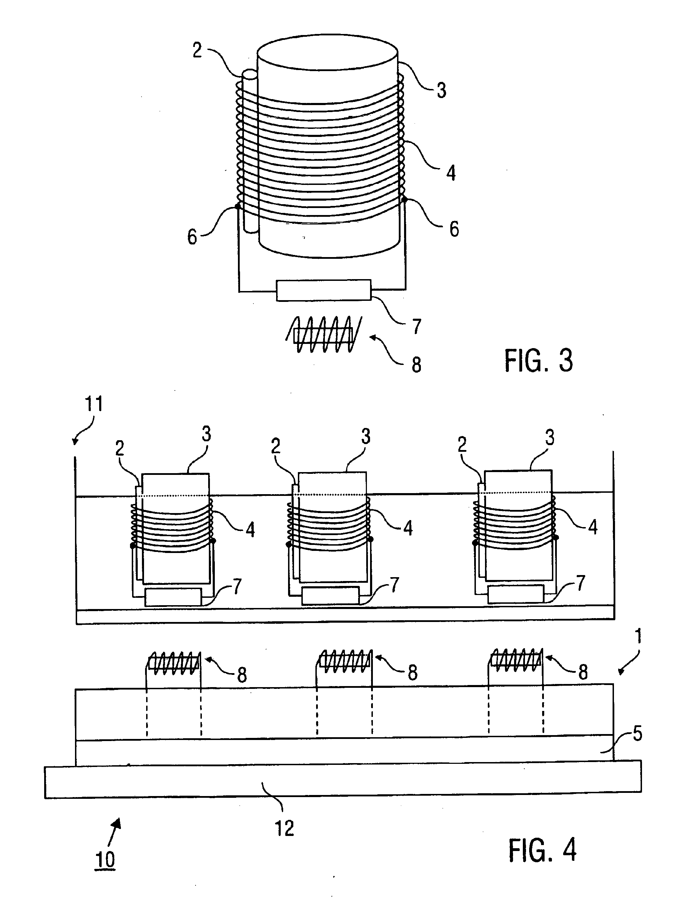

Figur 3 zeigt eine Perspektivansicht eines Probenbehälters 3, der mit einem Transponder 2 ausgestattet ist. Es ist z. B. ein stabförmiger Transponder 2 vorgesehen, der seitlich am Probenbehälter 3 angebracht ist. Bei der Kryospeicherung biologischer Proben wird eine Vielzahl derartiger Probenbehälter 3 mit hoher Packungsdichte bei einer Konservierungstemperatur, z. B. Temperatur von flüssigem Stickstoff, insbesondere - 196 °C, oder vom Dampf flüssigen Stickstoffs, insbesondere - 150 °C, in einem Kryotank gelagert oder bei der Konservierungstemperatur oder bei Raumtemperatur außerhalb des Kryotanks gelagert oder bearbeitet.

Der Probenbehälter 3 weist eine zylinderförmige, mit einem Deckel verschließbare Kammer zur Aufnahme einer Probe auf. Die Kammer hat z. B. einen Durchmesser von 8 mm und eine axiale Länge von 16 mm. Außerdem ist der Probenbehälter 3 mit einer Abschirmspule 4 versehen, mit der die oben beschriebene Gegenfelderzeugung erzielt werden kann. Die Abschirmspule 4 kann am Probenbehälter 3 fixiert (z. B. starre Einbettung der Spule in den Probenbehälter) oder trennbar (z. B. starre Einbettung der Spule in eine Halteplatte) angeordnet sein. Im illustrierten Beispiel erstreckt sich die Abschirmspule 4 über die gesamte axiale Länge des Probenbehälters 3. Die Abschirmspule 4 ist aus einem gewundenen, draht- oder filamentförmigen Leiter, z. B. aus Kupfer, Aluminium, oder versilbertem Kupfer gebildet. Der Leiter hat z. B. eine Dicke von 0,2 mm und z. B. eine Windungszahl von $N_1$ = 300. Die Windungszahl $N_1$ kann, wie unter Bezug auf Figur 2 erläutert, in Abhängigkeit von der Feldstärke des Transponderfeldes und der Dimensionierung der Transponderspule so gewählt werden, dass im kurzgeschlossenen Zustand eine teilweise oder vollständige Unterdrückung des Transponderfeldes erfolgt.

Wie in Figur 3 gezeigt, kann der elektrische Leiter der Abschirmspule 4 für die Gegenfelderzeugung um den Probenbehälter 3 gewickelt sein. Weiterhin sind die beiden Spulenkontakte 6 mit einem Reedrelais 7 versehen, so dass die Abschirmspule 4 geöffnet oder kurzgeschlossen werden kann. Das Reedrelais 7 kann kontaktlos durch die Relaisspule 8 geschaltet werden, wie oben unter Bezug auf Figur 1 beschrieben wurde.

Eine erste Variante der erfindungsgemäßen Datenübertragungsvorrichtung 10 mit einer Antenneneinrichtung 1 und einer Trägereinrichtung 11, auf der Probenbehälter 3 mit Transpondern 2 angeordnet sind, ist schematisch in Figur 4 gezeigt. Bei dieser Ausführungsform der Erfindung sind die Abschirmspulen 4 mit der Trägereinrichtung 11 verbunden.

Die Trägereinrichtung 11 umfasst eine Halterung, z. B. eine Platte oder ein Gehäuse, auf der die Transponder 2 und die Probenbehälter 3, beispielsweise mit biologischen Proben, angeordnet sind. Mit jedem Probenbehälter 3 ist ein Transponder 2 verbunden, so dass jeder Transponder 2 einer Probe zugeordnet werden kann. Zudem ist jeweils eine Abschirmspule 4 an einem der Probenbehälter 3 angeordnet, wobei die Abschirmspulen 4 mit der Trägereinrichtung 11 verbunden und/oder am Probenbehälter 3 befestigt sein können.

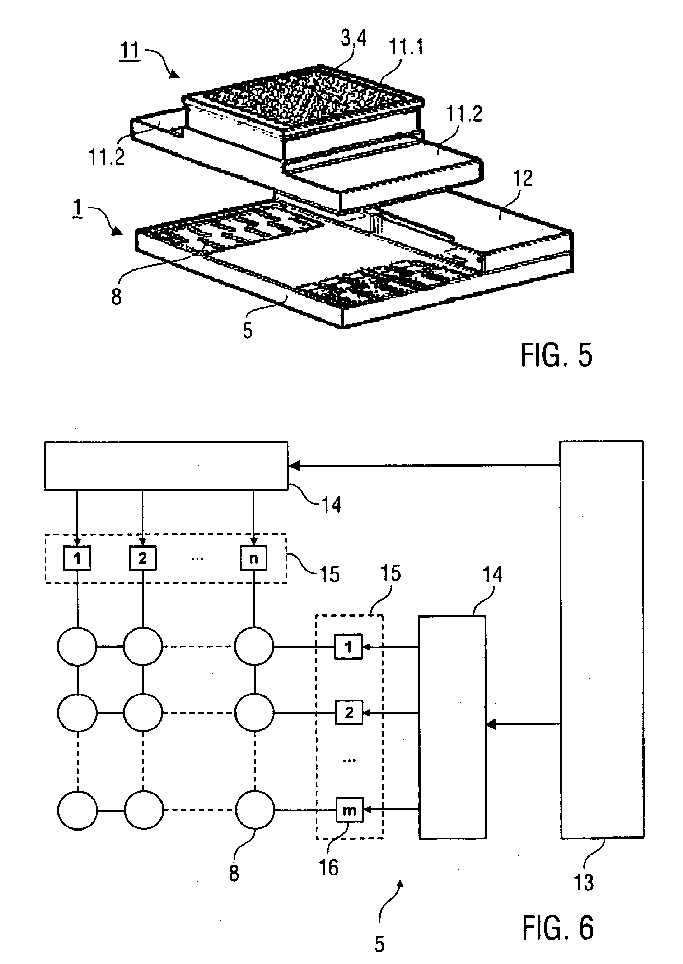

Wenn die Abschirmspulen 4 mit der Trägereinrichtung 11 verbunden sind, kann der Probenbehälter 3 mit dem Transponder 2 jeweils von der Trägereinrichtung 11 mit den Abschirmspulen 4 trennbar sein. Die Trägereinrichtung 11 kann z. B. mit einer Vielzahl von Aufnahmen ausgestattet sein, die jeweils zum Einsetzen eines Probenbehälter 3 mit einem Transponder 2 eingerichtet und von einer Abschirmspule 4 umgeben sind (siehe Figur 5). Alternativ oder zusätzlich können die Abschirmspulen 4 am Probenbehälter 3 befestigt und mit diesem auf der Trägereinrichtung 11, z. B. über elektrische Steckkontakte angeordnet sein.

Wie in Figur 4 gezeigt, sind die Abschirmspulen 4 derart am Probenbehälter 3 angeordnet, dass die Abschirmspule 4 den Transponder 2 umschließt. Die Probenbehälter 3 bilden eine vorbestimmte geometrische Anordnung (Probenarray), z. B. eine regelmäßige Anordnung in geraden Reihen und Spalten (Matrixanordnung). In einer praktischen Anwendung können z.B. 100 Probenbehälter 3 in 10 Reihen und 10 Spalten angeordnet sein.

Zum Schalten der Abschirmspulen 4 ist jede Abschirmspule 4 mit jeweils einem Reedrelais 7 versehen, das mit den beiden Spulenkontakten 6 der Abschirmspule 4 verbunden ist. Die Reedrelais 7 sind in Figur 4 auf der Trägereinrichtung 11 jeweils unmittelbar neben oder unter dem Probenbehälter 3 mit dem Transponder 2 gezeigt. Diese Anordnung ist jedoch nicht zwingend erforderlich, da die Reedrelais 7 mit den Abschirmspulen 4 elektrisch verbunden sind. Daher können die Reedrelais 7 alternativ von den Abschirmspulen 4 entfernt, z. B. in mindestens einem an die Anordnung der Probenbehälter 3 benachbarten Feld positioniert sein, wie unten unter Bezug auf Figur 5 erläutert ist.

Die Antenneneinrichtung 1 ist mit einer Antenne 12 ausgestattet und für eine Kommunikation mit den Transpondern 2 konfiguriert. Die Antenne 12 ist mit der Selektiereinrichtung 5 fest verbunden. An der Selektiereinrichtung 5 sind Relaisspulen 8 vorgesehen, die auf die Reedrelais 7 der Trägereinrichtung 11 einwirken können. Die Relaisspulen 8 weisen eine geometrische Anordnung auf, die gleich der geometrischen Anordnung der Reedrelais 7 der Trägereinrichtung 11 ist, so dass jeweils eine der Relaisspulen 8 auf eines der Reedrelais 7 wirken kann. Weitere Einzelheiten der Selektiereinrichtung 5 sind unten unter Bezug auf Figur 6 erläutert.

Die Datenübertragung zwischen der Antenneneinrichtung 1 und der Trägereinrichtung 11 erfolgt bei der Ausführungsform gemäß Figur 4 mit den folgenden Schritten. Zunächst werden die Antenneneinrichtung 1 und die Trägereinrichtung 11 relativ zueinander ausgerichtet. Die Ausrichtung erfolgt derart, dass die Anordnung der Relaisspulen 8 benachbart zur Anordnung der Reedrelais 7 positioniert ist, so dass jeweils eine der Relaisspulen 8 auf eines der Reedrelais 7 einwirken kann. Des Weiteren werden mit der Selektiereinrichtung 5 alle Abschirmspulen 4 kurzgeschlossen, die beim folgenden Schreib-/LeseVorgang nicht angesprochen werden sollen. Ausschließlich die Abschirmspule 4 des Transponders 2, der angesprochen werden soll, bleibt im nicht-kurzgeschlossenen Zustand. Wenn die Reedrelais 7 im stromlosen Zustand die Spulenkontakte der Abschirmspulen 4 kurzschließen, so wird hierzu lediglich die Relaisspule 8 betätigt, mit der die Abschirmspule 4 des ausgewählten Transponders 2 elektrisch geöffnet werden soll. Diese Variante ist wegen des relativ geringen Energieverbrauchs bevorzugt. Alternativ können, falls die Reedrelais in einem stromlosen Zustand die Abschirmspulen 4 elektrisch öffnen, vorgesehen sein, die Relaisspulen 8 mit einem Schaltstrom zu beaufschlagen, die den Abschirmspulen 4 zugeordnet sind, welche kurzgeschlossen werden sollen. Wenn die Auswahl des gewünschten Transponders 2 erfolgt ist, wird die Antenne 12 betätigt, so dass Daten zwischen dem ausgewählten Transponder 2 und der Antenne 12 übertragen werden.

Weitere Einzelheiten der in Figur 4 gezeigten Ausführungsform der Erfindung sind in Figur 5 in schematischer Perspektivansicht illustriert. Gemäß Figur 5 umfasst die Trägereinrichtung 11 einen mittleren Abschnitt 11.1, in dem die Probenbehälter 3 mit den Transpondern und den Abschirmspulen 4 angeordnet sind, und zwei seitliche Abschnitte 11.2, in denen die Reedrelais (nicht dargestellt) angeordnet sind. Die Reedrelais sind jeweils mit einer der Abschirmspulen 4 elektrisch verbunden. Der mittlere Abschnitt 11.1 enthält eine Halterung mit einer Vielzahl von Aufnahmen jeweils für einen Probenbehälter 3 mit einem Transponder. Jede der Aufnahmen ist von einer der Abschirmspulen 4 umgeben. Entsprechend wird durch die Bestückung des mittleren Abschnitts 11.1 (Einsetzen der Probenbehälter 3 in die Aufnahmen) automatisch der jeweils zugehörige Transponder im Inneren der Abschirmspule ausgerichtet.

Die Antenneneinrichtung 1 umfasst die Antenne 12 und die Selektiereinrichtung 5. Die Selektiereinrichtung 5 ist in einem quaderförmigen Gehäuse untergebracht, auf dessen Oberfläche die Relaisspulen 8 zum Schalten der Reedrelais angeordnet sind. Die Anordnung der Relaisspulen 8 ist in zwei Feldern vorgesehen, deren Größe und Form der Größe und Form der seitlichen Abschnitte 11.2 der Trägereinrichtung 11 gleich sind. Wenn die Trägereinrichtung 11 auf die freiliegende Oberfläche der Selektiereinrichtung 5 aufgesetzt wird, ist jeweils eine der Relaisspulen 8 benachbart zu einem der Reedrelais in den seitlichen Abschnitten 11.2 angeordnet.

Anhand von Figur 5 kann ein weiterer Vorteil der Erfindung dahingehend verdeutlicht werden, dass erfindungsgemäß ein Transponder oder ein Probenbehälter in einer der Aufnahmen lokalisiert werden kann. Wenn die Probenbehälter von der Trägereinrichtung trennbar (abnehmbar) sind, könnte ein fehlerhaftes Einsetzen oder eine unbeabsichtigte Umordnung der Probenbehälter auf der Trägereinrichtung auftreten. Im Rahmen einer Qualitätskontrolle oder einer Überprüfung einer Anordnung von Probenbehältern kann mit dem erfindungsgemäßen Verfahren selektiv geprüft werden, ob sich die gewünschten Probenbehälter auf der Trägereinrichtung und/oder ob sich die Probenbehälter an gewünschten Positionen auf der Trägereinrichtung befinden. Hierzu werden beispielsweise die Abschirmspulen an den einzelnen Aufnahmen aufeinanderfolgend so geschaltet, dass der zugehörige Transponder lesbar wird, die Informationen des Transponders ausgelesen und die ausgelesenen Informationen mit vorgegebenen Referenzdaten verglichen.

Die in den Figuren 4 und 5 gezeigte Ausführungsform der Erfindung hat den Vorteil, dass die Abschirmspulen 4 auf der Trägereinrichtung 11 kontaktlos geschaltet werden können. In einer konkreten Anwendung der Erfindung kann der mittlere Abschnitt 11.1 der Trägereinrichtung 11 mit den Probenbehältern 3 bestückt werden. Anschließend erfolgt das selektive Auslesen der Transponder für die jeweils mit der Selektiereinrichtung 5 ausgewählten Probenbehälter 3. Anschließend können die Probenbehälter 3 gemeinsam mit der Trägereinrichtung 11 oder von dieser getrennt in weiteren Verfahrensschritten, wie z.B. der Kryokonservierung unterzogen werden.

In Figur 6 ist die elektrische Schaltung der Selektiereinrichtung 5 aus den Figur 4 und 5 schematisch illustriert. Die Selektiereinrichtung 5 ist bei der Ausführungsform gemäß den Figuren 4 und 5 zum Beaufschlagen der Relaisspulen 8 (in Figur 6 durch Kreise dargestellt) mit einem Schaltstrom vorgesehen.

Die Selektiereinrichtung 5 umfasst einen Mikrocontroller 13, Decodierschaltungen 14 und Treiberschaltungen 15, die wie folgt zusammenwirken. Der Mikrocontroller 13 ist mit den Decodierschaltungen 14 und über eine Benutzerschnittstelle mit einem Steuerrechner (nicht dargestellt) verbunden. Die Decodierschaltungen 14 sind für eine Zeilen- und Spaltenadressierung der Relaisspulen 8 vorgesehen. Es ist jeweils eine Decodierschaltung 14 für die Spalten und eine Decodierschaltung 14 für die Reihen vorgesehen. Die Treiberschaltungen 15 enthalten jeweils n oder m Einzeltreiber 16 (n, m: Anzahl der Spalten bzw. Zeilen der Anordnung der Relaisspulen 8). Jeder der Einzeltreiber 16 kann z.B. durch ein Reedrelais gebildet werden. Die Treiberschaltungen 15, insbesondere die Einzeltreiber 16 sind mit einer Stromquelle (nicht dargestellt) verbunden. Bei Betätigung der Einzeltreiber 16 mit den Decodierschaltungen 14 werden die gewünschten Relaisspule 8 mit einem Schaltstrom beaufschlagt.

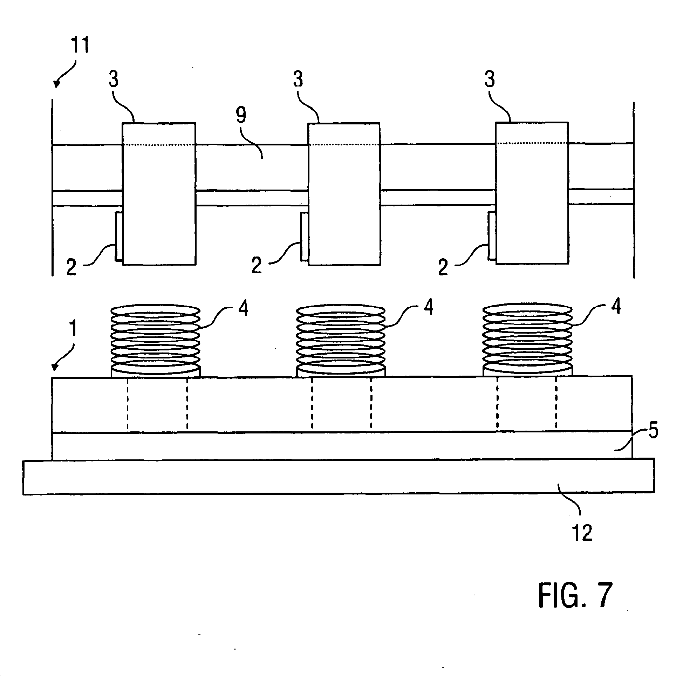

Eine weitere Variante der erfindungsgemäßen Datenübertragungsvorrichtung 10 mit einer Antenneneinrichtung 1, die mit einer Vielzahl von Abschirmspulen 4 versehen ist, und einer Trägereinrichtung 11, auf der Probenbehälter 3 mit Transpondern 2 angeordnet sind, ist schematisch in Figur 7 gezeigt. Bei dieser Ausführungsform der Erfindung sind die Abschirmspulen 4 mit der Antenneneinrichtung 1 verbunden.

Die Trägereinrichtung 11 umfasst eine Halteplatte 9 für die Probenbehälter 3, in denen sich beispielsweise biologische Proben befinden. Mit jedem Probenbehälter 3 ist ein Transponder 2 verbunden, so dass jedem Transponder 2 eine Probe zugeordnet werden kann. Die Probenbehälter 3 sind an der Halteplatte 9 frei stehend angeordnet, so dass mindestens der Teil der Probenbehälter 3 mit den Transpondern 2 von der Halteplatte 9 vorragt. Anders als in Figur 4 sind die Abschirmspulen 4 nicht mit der Trägereinrichtung 11, sondern fest mit der Antenneneinrichtung 1 verbunden.

Die Antennenrichtung 1 umfasst gemäß Figur 7 eine Antenne 12, mit der eine Selektiereinrichtung 5 verbunden ist. Die Selektiereinrichtung 5 ist mit den Spulenkontakten der Abschirmspulen 4 verbunden. Die Abschirmspulen 4 stehen an der Antenneneinrichtung 1 ab, wobei die Abschirmspulen 4 die selbe geometrische Anordnung auf der Antenneneinrichtung 1 haben wie die Probenbehälter 3 mit den Transpondern 2 an der Halteplatte 9.

Die Abschirmspulen 4 werden mit der Selektiereinrichtung 5, die wie in Figur 6 gezeigt aufgebaut sein kann, elektrisch geöffnet oder kurzgeschlossen. Hierzu werden die Antenneneinrichtung 1 und die Trägereinrichtung 11 gegenseitig so ausgerichtet, dass die Abschirmspulen 4 die Transponder 2 einschließen, d. h. die Abschirmspulen 4 werden über die frei stehenden Probenbehälter 3 geschoben, und die Gegenfelder der Abschirmspulen 4 die Transponderfelder unterdrücken können. Vorteilhafterweise ist auch bei dieser Ausführungsform der Erfindung eine kontaktlose Auswahl der Transponder 2 für die Datenübertragung möglich.

Die in der vorstehenden Beschreibung, den Zeichnungen und den Ansprüchen offenbarten Merkmale der Erfindung können sowohl einzeln als auch in Kombination für die Verwirklichung der Erfindung in ihren verschiedenen Ausgestaltungen von Bedeutung sein.

**Patentansprüche**

**1.** Verfahren zur Kommunikation zwischen einer Antenneneinrichtung (1) und einer Vielzahl von Transpondern (2), insbesondere bei der Speicherung biologischer Proben in Probenbehältern (3), mit dem Schritt

- Betätigung der Antenneneinrichtung (1), um eine elektromagnetische Wechselwirkung mit den Transpondern (2) zu bilden, **gekennzeichnet durch** die Schritte
- Anordnung der Transponder (2) mit dichter Packung,
- Bereitstellung einer Vielzahl von Abschirmspulen (4), wobei jeweils eine der Abschirmspulen (4) an einem der Transponder (2) angeordnet ist,
- Auswahl von mindestens einem Transponder (2), für den die elektromagnetische Wechselwirkung mit der Antenneneinrichtung (1) unbeeinflusst bleiben soll, und

- Bildung eines elektrischen Kurzschluss an allen Abschirmspulen (4) mit Ausnahme von mindestens einer ausgewählten Abschirmspule (4), die an dem mindestens einen ausgewählten Transponder (2) angeordnet ist, so dass die elektromagnetische Wechselwirkung mit dem mindestens einen Transponder (2) unterdrückt wird, an dem die mindestens eine kurzgeschlossene Abschirmspule (4) angeordnet ist, wobei ein Schalten der Abschirmspulen (4) mit einer Selektiereinrichtung (5) erfolgt und elektrische Spulenkontakte (6) der mindestens einen ausgewählten Abschirmspule (4) des mindestens einen ausgewählten Transponders geöffnet und der übrigen Abschirmspulen (4) kurzgeschlossen werden.

2. Verfahren gemäß Anspruch 1, bei dem

   - die Spulenkontakte (6) jeweils mit einem Relais geöffnet oder kurzgeschlossen werden.

3. Verfahren gemäß Anspruch 2, bei dem

   - die Spulenkontakte (6) jeweils mit einem Reedrelais (7) geöffnet oder kurzgeschlossen werden.

4. Verfahren gemäß Anspruch 3, bei dem

   - in einem stromlosen Zustand des Reedrelais (7) einer Abschirmspule (4) deren Spulenkontakte (6) kurzgeschlossen sind, oder
   - in einem stromlosen Zustand des Reedrelais (7) einer Abschirmspule (4) deren Spulenkontakte (6) geöffnet sind.

5. Verfahren gemäß einem der vorhergehenden Ansprüche, bei dem mindestens eines der folgenden Merkmale vorgesehen ist:

   - die Transponder (2) und die Abschirmspulen (4) sind auf einer gemeinsamen Trägereinrichtung (11) angeordnet, wobei eine gegenseitige Ausrichtung der Selektiereinrichtung (5) und der Trägereinrichtung (11) vorgesehen ist, so dass die Selektiereinrichtung (5) die Abschirmspulen (4) schalten kann,
   - die Abschirmspulen (4) sind mit der Selektiereinrichtung (5) verbunden, wobei eine gegenseitige Ausrichtung der Selektiereinrichtung (5) und der Transponder (2) vorgesehen ist, so dass die Abschirmspulen (4) auf die Transponder (2) einwirken können, und
   - bei der Betätigung der Antenneneinrichtung (1) in der mindestens einen kurzgeschlossenen Abschirmspule (4) wird eine Spannung induziert, die ein elektromagnetisches Feld an der mindestens einen kurzgeschlossenen Abschirmspule (4) erzeugt, das einem elektromagnetischen Feld des mindestens einen Transponders (2) abschwächend entgegengerichtet ist, an dem die mindestens eine kurzgeschlossene Abschirmspule (4) angeordnet ist.

6. Datenübertragungsvorrichtung (10), insbesondere zum Betrieb einer Probenaufnahmeeinrichtung mit Probenbehältern (3) zur Speicherung biologischer Proben, umfassend:

   - eine Vielzahl von Transpondern (2), und
   - eine Antenneneinrichtung (1), die konfiguriert ist, eine elektromagnetische Wechselwirkung mit den Transpondern (2) zu bilden,
   **gekennzeichnet durch**
   - eine Vielzahl von Abschirmspulen (4), wobei jeweils eine der Abschirmspulen (4) an einem der Transponder (2) angeordnet ist, wobei
   - die Transponder (2) mit dichter Packung angeordnet sind,
   - mindestens eine der Abschirmspulen (4) für eine Bildung eines elektrischen Kurzschluss der mindestens einen Abschirmspule (4) konfiguriert ist, so dass die elektromagnetische Wechselwirkung mit dem mindestens einen Transponder (2) unterdrückt wird, an dem die mindestens eine kurzgeschlossene Abschirmspule (4) angeordnet ist, und
   - eine Selektiereinrichtung (5), mit der die Abschirmspulen (4) einzeln geschaltet werden können, wobei elektrische Spulenkontakte (6) von mindestens einer ausgewählten Abschirmspule (4) geöffnet werden können, die an mindestens einem ausgewählten Transponder angeordnet ist, und elektrische Spulenkontakte (6) von den übrigen Abschirmspulen (4) kurzgeschlossen werden können, so dass die elektromagnetische Wechselwirkung mit dem mindestens einen ausgewählten Transponder gebildet und mit den übrigen Transpondern unterdrückt wird.

7. Datenübertragungsvorrichtung gemäß Anspruch 6, bei der

   - die Spulenkontakte (6) der Abschirmspulen (4) jeweils mit einem Relais verbunden sind.

8. Datenübertragungsvorrichtung gemäß Anspruch 7, bei der

   - das Relais jeweils ein Reedrelais (7) mit einer Relaisspule (8) umfasst.

9. Datenübertragungsvorrichtung gemäß Anspruch 8, bei der

   - das Reedrelais (7) mit einer Öffner-Funktion konfiguriert ist, oder
   - das Reedrelais (7) mit einer Schließer-Funktion konfiguriert ist.

10. Datenübertragungsvorrichtung gemäß einem der Ansprüche 6 bis 9, bei der

   - die Abschirmspulen (4) jeweils einen der Transponder mindestens teilweise einschließen.

11. Datenübertragungsvorrichtung gemäß einem der Ansprüche 6 bis 10, bei der

   - die Transponder (2) jeweils mit einem Probenbehälter (3) zur Aufnahme biologischer Proben verbunden sind

12. Datenübertragungsvorrichtung gemäß Anspruch 11, bei der

   - die Abschirmspulen (4) jeweils mit einem der Probenbehälter (3) verbunden sind oder jeweils einen der Probenbehälter (3) einschließen.

13. Datenübertragungsvorrichtung gemäß einem der Ansprüche 6 bis 12, bei der

   - die Transponder (2) und die Abschirmspulen (4) auf einer gemeinsamen Trägereinrichtung angeordnet sind, und
   - die Selektiereinrichtung (5) und die Trägereinrichtung relativ zueinander beweglich sind.

14. Datenübertragungsvorrichtung gemäß einem der Ansprüche 6 bis 12, bei der

   - die Abschirmspulen (4) mit der Selektiereinrichtung (5) verbunden sind, und
   - die Selektiereinrichtung (5) und die Transponder (2) relativ zueinander beweglich sind.

**Claims**

1. A method for communication between an antenna device (1) and a plurality of transponders (2), in particular for the storage of biological samples in sample containers (3), with the step of

   - actuation of the antenna device (1) in order to establish an electromagnetic interaction with the transponders (2), **characterized by** the steps of:
   - arrangement of the transponders (2) with dense packing,
   - providing a plurality of shielding coils (4), wherein each one of the shielding coils (4) is arranged at one of the transponders (2),
   - selection of at least one transponder (2), for which the electromagnetic interaction with the antenna device (1) should remain unaffected, and
   - formation of an electric short-circuit at all shielding coils (4), except at least one selected shielding coil (4), which is arranged at the at least one selected transponder (2), so that the electromagnetic interaction with the at least one transponder (2) at which the at least one short-circuited shielding coil (4) is arranged is suppressed, wherein switching of the shielding coils (4) is carried out with a selection device (5) and electric coil contacts (6) of the at least one selected shielding coil (4) of the at least one selected transponder are opened and the remaining shielding coils (4) are short-circuited.

2. The method according to claim 1, wherein

- the coil contacts (6) are each opened with a Reed relay or short-circuited.

3. The method according to claim 2, wherein

- the coil contacts (6) are each opened with a relay or short-circuited.

4. The method according to claim 3, wherein

- in a currentless status of the Reed relay (7) of a shielding coil (4), their coil contacts (6) are short-circuited, or
- in a currentless status of the Reed relay (7) of a shielding coil (4), their coil contacts (6) are open.

5. The method according to any one of the preceding claims, wherein at least one of the following features is provided for:

- the transponders (2) and the shielding coils (4) are arranged on a common support device (11), wherein a mutual orientation of the selection device (5) and the support device (11) is provided for so that the selection device (5) can switch the shielding coils (4),
- the shielding coils (4) are connected with the selection device (5), wherein a mutual orientation of the selection device (5) and the transponders (2) is provided for so that the shielding coils (4) can act onto the transponders (2), and
- when actuating the antenna device (1), in the at least one short-circuited shielding coil (4) a voltage is induced, which generates an electromagnetic field at the at least one short-circuited shielding coil (4), which is oriented with a weakening effect in opposite direction to an electromagnetic field of the at least one transponder (2) at which the at least one short-circuited shielding coil (4) is arranged.

6. A data transmission device (10), in particular for operation of a sample receiving device with sample containers (3) for the storage of biological samples, comprising:

- a plurality of transponders (2), and
- an antenna device (1), which is configured to establish an electromagnetic interaction with the transponders (2), **characterized by**
- a plurality of shielding coils (4), wherein each one of the shielding coils (4) is arranged at one of the transponders (2), wherein
- the transponders (2) are arranged with dense packing,
- at least one of the shielding coils (4) is configured to form an electric short-circuit of the at least one shielding coil (4), so that the electromagnetic interaction with the at least one transponder (2) at which the at least one short-circuited shielding coil (4) is arranged is suppressed, and
- a selection device (5), with which the shielding coils (4) can be switched individually, wherein electric coil contacts (6) of at least one selected shielding coil (4), which are arranged at at least one selected transponder, can be opened and electric coil contacts (6) of the remaining shielding coils (4) can be short-circuited, so that the electromagnetic interaction with the at least one selected transponder is formed and suppressed with the remaining transponders.

7. The data transmission device according to claim 6, wherein

- the coil contacts (6) of the shielding coils (4) are each connected with a relay.

8. The data transmission device according to claim 7, wherein

- the relay comprises each a Reed relay (7) with a relay coil (8).

9. The data transmission device according to claim 8, wherein

- the Reed relay (7) is configured with a normally closed contact functionality, or
- the Reed relay (7) is configured with a normally open contact functionality.

10. The data transmission device according to any one of claims 6 to 9, wherein

- the shielding coils (4) each enclose at least partially one of the transponders.

**11.** The data transmission device according to any one of claims 6 to 10, wherein

- the transponders (2) are each connected with a sample container (3) for accommodating biological samples.

**12.** The data transmission device according to claim 11, wherein

- the shielding coils (4) are each connected with one of the sample containers (3) or each enclose one of the sample containers (3).

**13.** The data transmission device according to any one of claims 6 to 12, wherein

- the transponders (2) and the shielding coils (4) are arranged on a common support device, and
- the selection device (5) and the support device are movable relative to each other.

**14.** The data transmission device according to any one of claims 6 to 12, wherein

- the shielding coils (4) are connected with the selection device (5), and
- the selection device (5) and the transponders (2) are movable relative to each other.

**Revendications**

**1.** Procédé de communication entre un système d'antenne (1) et une pluralité de transpondeurs (2), en particulier lors du stockage d'échantillons biologiques dans des récipients d'échantillon (3), comprenant l'étape suivante

- actionnement du système d'antenne (1) afin de former une interaction électromagnétique avec les transpondeurs (2),

**caractérisé par** les étapes suivantes :

- agencement des transpondeurs (2) selon une forte densité d'implantation,
- mise à disposition d'une pluralité de bobines de blindage (4), chacune des bobines de blindage (4) étant disposée au niveau d'un des transpondeurs (2),
- sélection d'au moins un transpondeur (2) pour lequel l'interaction électromagnétique avec le système d'antenne (1) doit rester non influencée, et
- formation d'un court-circuit électrique sur toutes les bobines de blindage (4) à l'exception d'au moins une bobine de blindage (4) sélectionnée qui est disposée sur le au moins transpondeur (2) sélectionné de sorte que soit supprimée l'interaction électromagnétique avec le au moins un transpondeur (2) sur lequel la au moins une bobine de blindage (4) court-circuitée est disposée, un couplage des bobines de blindage (4) étant effectué par un système de sélection (5) et des contacts de bobine (6) électriques de la au moins une bobine de blindage (4) sélectionnée du au moins un transpondeur sélectionné étant ouverts et ceux des bobines de blindage (4) restantes étant court-circuités.

**2.** Procédé selon la revendication 1, dans lequel

- les contacts de bobine (6) sont respectivement ouverts ou court-circuités avec un relais.

**3.** Procédé selon la revendication 2, dans lequel

- les contacts de bobine (6) sont respectivement ouverts ou court-circuités avec un relais Reed (7).

**4.** Procédé selon la revendication 3, dans lequel

- dans un état sans courant du relais Reed (7) d'une bobine de blindage (4) les contacts de bobine (6) de celle-ci sont court-circuités, ou
- dans un état sans courant du relais Reed (7) d'une bobine de blindage (4) les contacts de bobine (6) de celle-ci sont ouverts.

**5.** Procédé selon l'une quelconque des revendications précédentes, dans lequel au moins une des caractéristiques suivantes est prévue :

- le transpondeur (2) et les bobines de blindage (4) sont disposés sur un système porteur (11) commun, une orientation opposée du système de sélection (5) et du système porteur (11) étant prévue de sorte que le système de sélection (5) puisse coupler les bobines de blindage (4),
- les bobines de blindage (4) sont reliées au système de sélection (5), une orientation opposée du système de sélection (5) et des transpondeurs (2) étant prévue de sorte que les bobines de blindage (4) puissent agir sur les transpondeurs (2), et
- lors de l'actionnement du système d'antenne (1), il est induit dans la au moins une bobine de blindage (4) court-circuitée une tension qui génère dans la au moins une bobine de blindage (4) court-circuitée un champ électromagnétique qui est orienté, de manière à s'affaiblir, à l'opposé d'un champ électromagnétique du au moins un transpondeur (2) dans lequel est disposée la au moins une bobine de blindage (4) court-circuitée.

**6.** Dispositif de transmission de données (10), en particulier pour l'exploitation d'un système de prise d'échantillon avec des récipients d'échantillon (3) pour le stockage d'échantillons biologiques, comportant :

- une pluralité de transpondeurs (2) et
- un système d'antenne (1) qui est configuré pour former une interaction électromagnétique avec les transpondeurs (2),

**caractérisé par**

- une pluralité de bobines de blindage (4), chacune des bobines de blindage (4) étant disposée au niveau d'un transpondeur (2),
- les transpondeurs (2) étant disposés selon une forte densité d'implantation,
- au moins une des bobines de blindage (4) étant configurée pour une formation d'un court-circuit électrique de la au moins une bobine de blindage (4) de sorte que soit supprimée l'interaction électromagnétique avec le au moins un transpondeur (2) sur lequel est disposée la au moins une bobine de blindage (4) court-circuitée, et
- un système de sélection (5) avec lequel les bobines de blindage (4) peuvent être couplées individuellement, des contacts de bobine (6) électriques d'au moins une bobine de blindage (4) sélectionnée, qui est disposée au niveau du au moins un transpondeur sélectionné, pouvant être ouverts et des contacts de bobine (6) électriques des bobines de blindage (4) restantes pouvant être court-circuités de sorte que l'interaction électromagnétique soit formée avec le au moins un transpondeur sélectionné et soit supprimée avec les transpondeurs restants.

**7.** Dispositif de transmission de données selon la revendication 6, dans lequel

- les contacts de bobine (6) des bobines de blindage (4) sont reliés respectivement à un relais.

**8.** Dispositif de transmission de données selon la revendication 7, dans lequel

- le relais comprend toujours un relais Reed (7) avec une bobine de relais (8).

**9.** Dispositif de transmission de données selon la revendication 8, dans lequel

- le relais Reed (7) est configuré avec une fonction de repos, ou
- le relais Reed (7) est configuré avec une fonction de travail.

**10.** Dispositif de transmission de données selon l'une quelconque des revendications 6 à 9, dans lequel

- les bobines de blindage (4) renferment chacune au moins partiellement un des transpondeurs.

**11.** Dispositif de transmission de données selon l'une quelconque des revendications 6 à 10, dans lequel

- les transpondeurs (2) sont reliés chacun à un récipient d'échantillon (3) pour la réception d'échantillons biologiques.

**12.** Dispositif de transmission de données selon la revendication 11, dans lequel

    - les bobines de blindage (4) sont reliées chacune à un des récipients d'échantillon (3) ou renferment chacune un des récipients d'échantillon (3).

**13.** Dispositif de transmission de données selon l'une quelconque des revendications 6 à 12, dans lequel

    - les transpondeurs (2) et les bobines de blindage (4) sont disposés sur un système porteur commun, et
    - le système de sélection (5) et le système porteur sont mobiles l'un par rapport à l'autre.

**14.** Dispositif de transmission de données selon l'une quelconque des revendications 6 à 12, dans lequel

    - les bobines de blindage (4) sont reliées au système de sélection (5) et
    - le système de sélection (5) et les transpondeurs (2) sont mobiles l'un par rapport à l'autre.

1

2 6

$\vec{B}$ $\vec{B}$

6

4

6

7

8

$\vec{B}$

12

VCC GND

**FIG. 1**

$l_1$

$N_1$

$A_1$

10 4

$A_2$

$U_{ind}$ $N_2$

$l_2$

**FIG. 2**

FIG. 3

FIG. 4

FIG. 5

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005050099 A1

- DE 102011004674 A1